**Europäisches Patentamt**

**European Patent Office**

**Office européen des brevets**

(19)

(11) Publication number : **0 112 703 B2**

# NEW EUROPEAN PATENT SPECIFICATION

(12)

(45) Date of publication of the new patent specification : **25.11.92 Bulletin 92/48**

(51) Int. Cl.$^5$ : **B60Q 1/14**

(21) Application number : **83307703.5**

(22) Date of filing : **19.12.83**

(54) Vehicle ligthing system.

(30) Priority : **22.12.82 GB 8236389**
**23.02.83 GB 8305057**

(43) Date of publication of application :
**04.07.84 Bulletin 84/27**

(45) Publication of the grant of the patent :
**10.12.86 Bulletin 86/50**

(45) Mention of the opposition decision :
**25.11.92 Bulletin 92/48**

(84) Designated Contracting States :
**AT BE CH DE FR IT LI LU NL SE**

(56) References cited :
**DE-A- 1 962 093**

(56) References cited :
**DE-A- 2 258 314**
**DE-A- 2 431 313**
**DE-U- 1 696 455**
**FR-A- 2 497 484**
**FR-A- 2 511 958**
**Zeitschrift "Kraftfahrzeug-Elektriker", Heft 8, 41. Jahrgang, 11. April 1968**

(73) Proprietor : **Danor Electronics Limited**
**2 Clovelly Road**
**Glenfield Leicester LE3 8AA (GB)**

(72) Inventor : **Palmer, Norman Harold George**
**2 Clovelly Road**
**Glenfield Leicester, LE3 8AA (GB)**

(74) Representative : **Spoor, Brian et al**
**c/o E.N. LEWIS & TAYLOR 144 New Walk**
**Leicester, LE1 7JA (GB)**

EP 0 112 703 B2

## Description

This invention relates to a vehicle lighting system.

In conditions of bad visibility, many motorists drive with only the vehicle sidelights illuminated, whereas it is recommended by such bodies as the United Kingdom Ministry of Transport and motoring organisations that dipped beam headlamps should be used. In recent years, a number of vehicle systems have been developed which ensure that the sidelights cannot be energised when the ignition switch is turned on without the dipped beam filaments being energised also. More particularly, these systems incorporate a device operative to energise the dipped beam filaments automatically when the sidelights are energised and to de-energise the dipped beam filaments automatically when the sidelights are subsequently de-energised or when main beam filaments of the headlamps are energised. A typical example of such a system is disclosed in FR-A-2497484, in accordance with the preamble of the present claim 1.

In existing systems of this type, however, the aforesaid device energises the dipped beam filaments as soon as the ignition switch is closed, which imposes a considerable current drain on the vehicle battery. If the battery is already at a low charge level (such as is often the case in winter when this particular system will be used the most), then the additional current drain imposed by the dipped beam filaments will make it difficult or even impossible to start the engine. It then becomes necessary to switch off the sidelights, which is not only dangerous for other motorists but may also be illegal.

The present invention overcomes this problem by providing means which senses the voltage at a predetermined point in the charging circuit where the voltage varies as the speed of the engine increases and which activates the device only if the sidelights are energised and if the speed of the engine is sufficient to cause this voltage to pass through a preselected level. The dipped beam filaments do not therefore become energised until after the engine has been safely started, thereby avoiding premature current drain on the battery.

In a first aspect, the present invention comprises the sensor means additionally to be responsive to a third voltage at a predetermined point in the side lights circuit, and by connecting the sensor means to this predetermined point by way of a diode which places a voltage clamp on the sensor means until the speed of the engine is sufficient to cause the first voltage to rise above a pre-selected level the second voltage is at a level corresponding to the main beam filaments being de-energised and the third voltage is above a level corresponding to the side lights being energised.

In a second aspect, the present invention similarly arranges for the sensor means to be responsive to a third voltage at a pre-determined point in the side lights circuit, and also arranges for the sensor means to be connected between that point and the main conduction path of a transistor whose base is connected to the ignition/starting circuit. In this way, the voltage drop across the sensor means is insufficient to cause the switching means to operate unless the speed of the engine is sufficient to cause the first voltage to pass through a preselected level, the second voltage is at a level corresponding to the main beam filaments being de-energised, and the third voltage is above a level corresponding to the side lights being energised.

It is to be noted that a system described in DE-A-1962093 employs sensor means in the form of a relay coil in the charging circuit, and switching means in the form of a relay contact connected at one side to the side lights circuit and at the other side to a point in the headlamps circuit. This latter point is a "common" terminal of the main/dipped beam selector switch. Therefore, it is not necessarily the dipped beam filaments which will be energised with the side lights: if the selector switch happens to be in the "main beam" position, then the main beam filaments will be energised instead. This will give rise to unwanted dazzle.

Desirably, the lighting system comprises switch means which is manually operable to energise the dipped beam filaments of the headlamps, the dipped beam filaments being operated at substantially the same intensity when energised by said device as is the case when they are energised by said switch means. Alternatively, the dipped beam filaments may be operated at a reduced intensity when energised by said device than is the case when they are energised by said switch means, for example by connecting a resistance in series between said device and the dipped beam filaments, or (where the dipped beam filaments are energised by means of a pulsed electrical signal) by varying the mark/space ratio of the pulses in said signal. As a further alternative, each headlamp can comprise a main beam filament, a first dipped beam filament which is energised by said device, and a second dipped beam filament which is energised by means of a manually operable switch, the first dipped beam filament being arranged to emit light at a lower intensity than the second dipped beam filament. Conveniently, the said device comprises an oscillator producing output pulses and a power switching circuit which is driven by the oscillator and which supplies pulses of electrical power to the dipped beam filaments. In this case, it is preferred that an initial output pulse from the oscillator is of longer duration than subsequent output pulses therefrom. The switching circuit can include first semiconductor switching means by means of which pulses are supplied to the dipped beam filaments when the latter are cold, and second semiconductor switching means by means of which pulses are supplied to the dipped beam filaments after the latter have heated up. In this case, the pulses supplied by the first semiconductor switching means are preferably reduced in power as compared with the pulses supplied by the second semiconductor switching means. A resistance can be provided in series between the first semiconductor switching means and the dipped beam filaments to limit the initial inrush current of the first semiconductor switching means.

Desirably, a control terminal of the second semiconductor switching means is connected to the main conduction path of a semiconductor switching element, the switching element being rendered conductive in response to an increase in the voltage drop across the dipped beam filaments as the latter heat up. The control terminal of the switching element can also be connected to the main conduction path of a further semiconductor switching element, with a charging circuit preventing said further switching element from becoming conductive until a predetermined time delay after the first semiconductor switching means supplies an initial pulse to the dipped beam filaments.

Advantageously, the system also comprises a control circuit which renders the power switching circuit inoperative in response to the dipped beam filaments being short-circuited. This control circuit may include a charging unit which discharges when the second semiconductor switching means supplies a pulse to the dipped beam filaments and charges during the interpulse period, the time constant for such charging being substantially greater than the period of the output pulses from the oscillator, and a disabling circuit to disable the power circuit in the event that the charging circuit charges beyond a predetermined amount, corresponding to the second semiconductor switching means being out of operation for longer than the time normally taken for the dipped beam filaments to heat up.

Preferably, a control terminal of the first semiconductor switching means is connected to the main conduction path of a semiconductor switching element, the output pulses from the oscillator are applied to a control terminal of the switching element, and the disabling circuit is arranged to render the switching element non-conductive in the event of the charging circuit charging beyond said predetermined amount. In this case the disabling circuit can include a further semiconductor switching element having its main conduction path connected to the control terminal of the first-mentioned switching element, the further switching element normally being non-conductive but being rendered conductive by charging of the charging circuit beyond said predetermined amount.

In an embodiment, the sensor means includes a relay having a coil and switch contacts which are electrically connected to the dipped beam filaments.

Advantageously, a diode is connected electrically in parallel with the relay coil to suppress inductive voltages. Additionally or alternatively, a capacitor may be connected electrically in parallel with the relay switch contacts to suppress arcing.

In the aforesaid embodiment, it is preferred that a first switch is operable to energise the sidelights and is connected electrically in series with the relay coil, a second switch is operable to energise selectively the main beam filaments and the dipped beam filaments, and the switch contacts of the relay are electrically connected between a power supply and a point between the second switch and the dipped beam filaments.

The invention will now be further described, by way of example only, with reference to the accompanying drawings in which:-

Figure 1 is a circuit diagram of a first embodiment of a vehicle lighting system according to the present invention;

Figure 2 is a circuit diagram of a second embodiment of a vehicle lighting system according to the present invention; and

Figure 3 is a circuit diagram of a third embodiment of a vehicle lighting system according to the present invention.

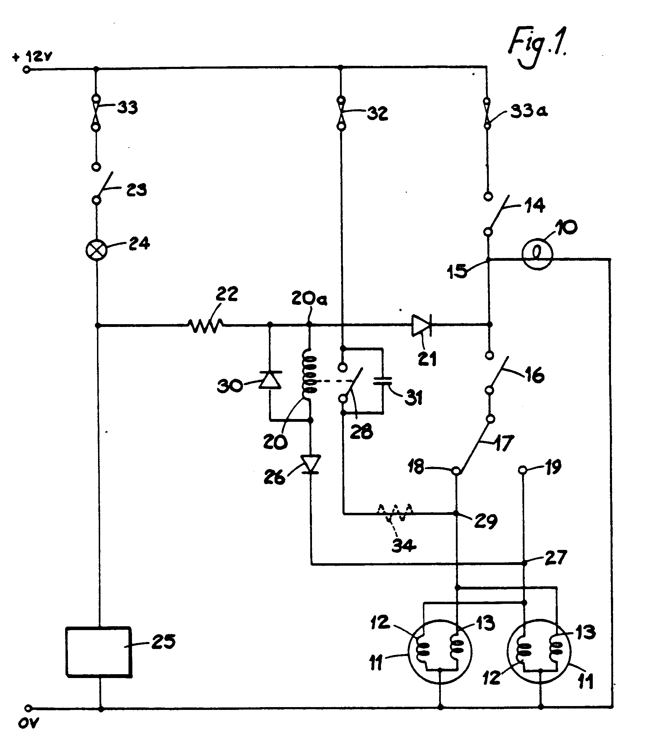

Referring first to Figure 1, the lighting system shown therein includes sidelights 10 (only one shown) and headlamps 11 each having a main beam filament 12 and a dipped beam filament 13. The sidelights 10 are electrically connected to a power supply (derived from a battery of the vehicle) by way of a switch 14, while the connection point (referenced 15) between the sidelights and the switch 14, is electrically connected by way of a further switch 16 to a movable switch contact 17. The contact 17 is engageable selectively with a first fixed contact 19 which is connected to the main beam filaments 12 of the headlamps, and with a second fixed contact 18 which is connected to the dipped beam filaments 13. Operation of the switch 14 alone causes the sidelights 10 to be energised, while additional operation of the switch 16 causes either the main beam filaments 12 or the dipped beam filaments 13 to be energised, according to whether the movable contact 17 engages the fixed contact 18 or the fixed contact 19. Thus far described, the lighting system is entirely conventional.

A relay coil 20 has one terminal 20a thereof connected to the anode of a diode 21, the cathode of the diode being connected to the point 15. The terminal 20a of the coil 20 is also connected by way of a resistor 22 to a charging circuit of the vehicle, the charging circuit including an ignition switch 23, an ignition warning lamp 24 and an alternator or dynamo 25. The other terminal of the relay coil 20 is connected to the anode of a diode 26, which diode has its cathode connected to a point 27 between the contact 19 and the main beam filaments 12 of the headlamps 11.

Contacts 28, which open and close according to the energisation state of the relay coil 20, are electrically connected between the power supply and a point 29 between the contact 18 and the dipped beam filaments 13 of the headlamps. The contacts 28 are normally open, but close when a current is passed through the relay coil 20. A diode 30 is connected electrically in parallel with the coil 20 to suppress inductive voltages when the contacts 28 open, while a capacitor 31 is connected electrically in parallel with the contacts 28 to suppress arcing. A fuse 32 is provided between the power supply and the contacts 28, while further fuses 33 and 33a are disposed respectively in the aforementioned charging circuit, and in the positive supply line to the switch 14.

The above-described lighting system operates as follows. When the ignition switch 23 is initially closed with the sidelights 10 off (i.e. the switch 14 open), a small voltage drop is developed across the alternator or dynamo 25 (about 1.2v for a 12v power supply). This voltage drop remains low once the engine has been started and is merely idling, but rapidly increases to substantially the voltage of the power supply when the engine is accelerated. Although the relay coil 20 is supplied with electricity from the alternator or dynamo 25 during this procedure, as long as the sidelights 10 remain off the diode 21 will clamp the terminal 20a of the coil 20 to a voltage which is insufficient to cause the contacts 28 to close. When the sidelights are switched on, however, the voltage at the cathode of the diode 21 will rise substantially to the voltage of the power supply and the clamp will therefore be removed. The voltage at the terminal 20a of the relay coil 20 will then rise to a value dependent upon the relative resistances of the relay coil and the resistor 22: this value is chosen so as to be sufficient to cause the contacts 28 to close, so that the dipped beam filaments 13 become energised through those contacts. Thus, it is impossible for the sidelights 10 to be switched on when the engine is running at other than idling speed without the dipped beam filaments of the headlamps automatically being energized too.

In a preferred arrangement for use with a 12v power supply, the relay has a nominal operating voltage of 6v, and the resistor 22 is chosen so as to have the same resistance as the relay coil 20. In practice, it is found that the contacts 28 close when the voltage across the relay coil 20 is only about 4.4v. Since the coil voltage is rising rapidly at this point, very positive operation of the contacts 28 occurs so that there is no chance of any contact sizzle.

Although there is a high inrush current when the relay contacts 28 first close, the resultant momentary drop in voltage at the relay contacts will not affect the operation of the coil 20, since as mentioned previously the latter is supplied from the alternator or dynamo 25.

The above description assumes that the switch 16 is open, so that neither filaments of the headlamps are already energised. If, under the above condition, the switch 16 and the switch contact 17 are operated so as to energise the main beam filaments 12, the voltage at the cathode of the diode 26 will rise substantially to the power supply voltage. This prevents any significant current flow through the relay coil 20, and hence the contacts 28 open once again. Consequently, the supply of electricity to the dipped beam filaments 13 is terminated and these filaments become extinguished.

From the above description, it will be appreciated that the relay will operate only when the alternator or dynamo 25 is producing an output, the sidelights 10 are on and the main beam filaments 12 are off.

It may be advantageous for the dipped beam filaments 13 to operate at a reduced intensity when energised via the relay contacts 28 as compared with when they are energised by way of the switches 14, 16 and the switch contacts 17, 18. For this purpose, a ballast resistance 34 (shown in broken lines) can be incorporated between the contacts 28 and the point 29.

In a modification of the above-described lighting system, the positions of the resistor 22 and the diode 21 are interchanged so that the relay coil 20 is supplied with electricity via the switch 14 rather than from the alternator or dynamo 25. Although such a modified system will on the whole operate satisfactorily, problems can be encountered with the relay in the event that the voltage drop across the alternator or dynamo 25 rises abnormally slowly when the engine is accelerated.

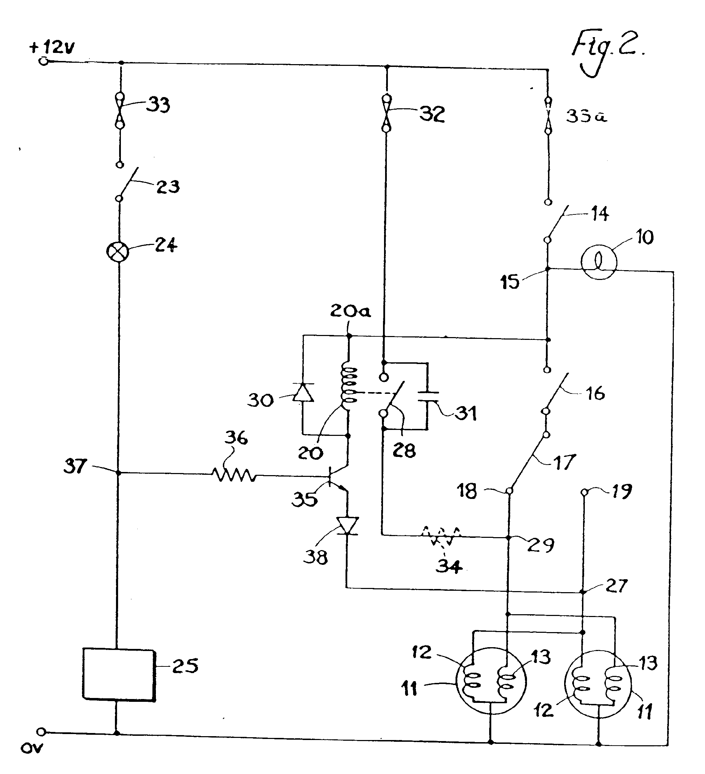

A second embodiment of the invention is shown in Figure 2, and is generally similar to the system shown in Figure 1, similar parts being accorded the same reference numerals. In this embodiment, however, the diode 21 and the resistor 22 are omitted and the terminal 20a of the relay coil 20 is instead connected directly to the point 15. Also, a transistor 35 is now provided, such that its collector-emitter path is connected between the other terminal of the relay coil 20 and the point 27. The base of the transistor 35 is connected by way of a resistor 36 to a point 37 between the ignition warning lamp 24 and the alternator or dynamo 25.

When the switch 14 is closed to energise the sidelights 10, power is supplied to the relay coil 20 from the power supply. If at this time the switch 23 has not been operated to turn on the ignition circuit, the transistor 35 will not conduct since the point 37 to which its base is connected will be at zero volts. Therefore, the relay coil 20 will not be energised. If the switch 23 is closed but the engine is not started, the voltage at the point 37 will rise slightly but, due to the presence of a diode 38 in the emitter circuit, this will not be sufficient to turn the transistor 35 on. When however the engine is subsequently started, the voltage at the point 37 will rise significantly and base current will flow into the transistor 35 causing the latter to conduct. The relay coil 20 will thus be energised, thereby closing the contacts 28 and energising the dipped beam filaments 13 by way of the fuse 32 and the contacts 28.

It will thus be manifest that, when the ignition circuit is turned on and the engine is running, it will not be possible to turn on the sidelights 10 without also causing the dipped beam filaments 13 to come on. However, when the engine is not running the sidelights 10 can be turned on without the filaments 13, e.g. for parking purposes at night.

If it is desired to operate the dipped beam filaments 13 in a conventional manner, the switch 16 is closed and the contact 17 is moved into engagement with the fixed contact 19 (this assumes of course that the switch 14 will still be closed). The relay contacts 28 will thus be by-passed by the switches 14, 16 and the contacts 17, 19. As in the embodiment of Figure 1, a ballast resistance 34 may be provided so that the dipped beam filaments 13 are operated at a reduced intensity when they are energised by way of the relay contacts 28.

When the main beam filaments 12 are to be operated, the contact 17 is engaged with the fixed contact 19 with the switches 14 and 16 once again being closed. This causes the voltage at the point 27 to rise substantially to the level of the power supply, so that the relay coil 20 becomes de-energised. Hence, the contacts 28 open and the dipped beam filaments 13 are turned off.

The diode 38 in the emitter circuit of the transistor 35 prevents a reverse voltage from occurring across the base-emitter junction of the transistor if the main beam filaments 12 are energised and the alternator or dynamo 25 is not charging.

In the embodiment of Figure 2, the relay circuit has been described as being associated with the alternator or dynamo of a vehicle.

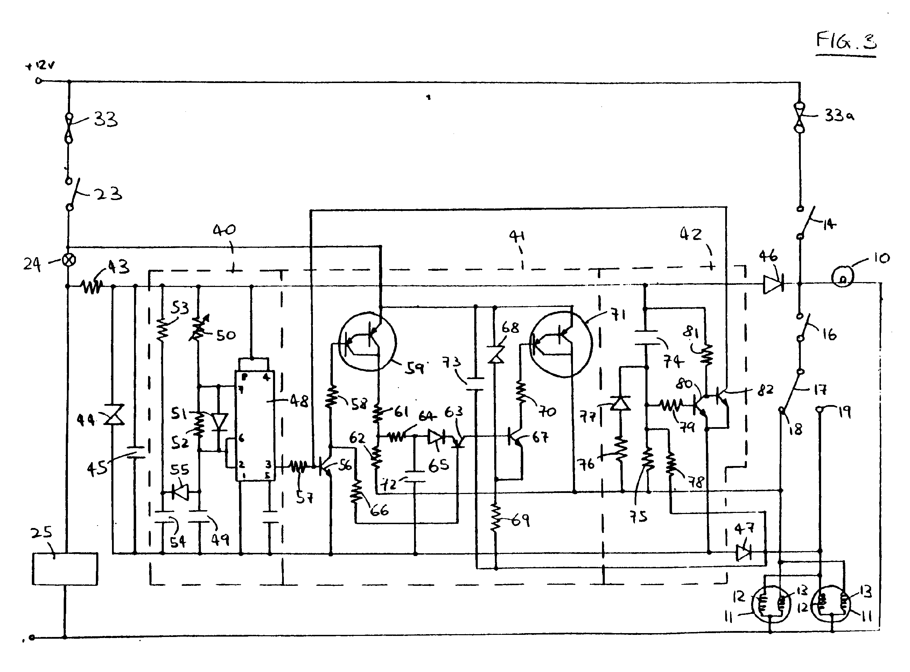

In all of the embodiments described above, a series resistor 34 is employed to achieve dimming of the dipped beam filaments 13 when they are energised via the relay as compared with when they are energised via the switch 16 and the switch contacts 17, 18. This is quite satisfactory when only a limited reduction in intensity is required, but for greater intensity reductions the resistor 34 will have to dissipate relatively large amounts of power and therefore becomes more expensive to provide. To overcome this particular problem, a system as shown in Figure 3 may be used instead. In this system, the dipped beam filaments are powered by a pulsed electrical supply and their intensity is controlled by suitably varying the ratio between the "ON" and "OFF" periods.

More particularly, the system illustrated in Figure 3 comprises generally an oscillator circuit 40 which controls a power switching circuit 41 supplying power to the dipped beam filaments 13, and a control circuit 42 to protect the system in the event that the filaments 13 become short-circuited. The oscillator circuit 40 is supplied from a point between the warning lamp 24 and the alternator 25 by way of a resistor 43, a zener diode 44 and a capacitor 45 which together form a stabilised power supply. When the engine is not running, the output voltage produced by this power supply will be very low and the oscillator circuit 40 will not function. If the engine is running but the sidelights 10 are not switched on, then a diode 46 connected between the sidelights and the resistor 43 will clamp the output voltage of the power supply to a level (e.g. 1 volt) which is still insufficient to cause the oscillator circuit 40 to operate. However, if the sidelights 10 are now switched on, the output voltage of the power supply will rise to a relatively large value (e.g. 10 volts). A diode 47 is connected between the negative side of the oscillator circuit 40 and the main beam filaments 12: if these filaments are not energised, then the oscillator circuit will be connected to battery negative via the diode 47 and the filaments 12, and hence the oscillator circuit will function. If however the main beam filaments 12 are turned on, then the diode 47 will be reverse-biassed and the oscillator circuit 40 will cease to operate. Thus, the oscillator circuit is operational only when the engine is running, the sidelights 10 are switched on and the main beam filaments 12 are turned off.

The oscillator circuit 40 is composed of an integrated timer circuit 48 which is connected for astable operation: in the illustrated arrangement, the timer circuit is of the well-known 555 type and therefore the pin connections thereof will not be described in detail since these will readily be appreciated by a person skilled in the art. Suffice it to say that pin 3 forms an output terminal of the oscillator circuit. When the voltage at this terminal is at a high level, a capacitor 49 charges by way of a variable resistor 50 and a diode 51 until the voltage across it reaches a predetermined value (in this case, two-thirds of the supply voltage). At this point, the voltage at the output terminal drops to a low level and the capacitor 49 discharges via a resistor 52 into pin 7 of the timer circuit 48. When the voltage across the capacitor 49 drops to another predetermined value (e.g. one-third of the supply voltage), the voltage at the output terminal rises to its high level once again and the cycle then repeats. The voltage produced at the output terminal of the oscillator circuit 40 thus consists of a series of pulses whose width can be controlled by adjusting the variable resistor 50.

As will become apparent from the ensuing description, there is a danger that the dipped beam filaments 13 will not be switched on properly if the mark/space ratio of these voltage pulses is small. In order to anticipate this eventuality, the initial voltage pulse is made much wider by means of a resistor 53, a capacitor 54 and a diode 55. More particularly, as soon as the supply voltage for the oscillator circuit starts to rise as aforesaid when the engine is running and the sidelights are switched on, the capacitor 54 will start to charge at a rate determined by the time constant of the capacitor 54 and the resistor 53. This time constant is made much longer than that of the variable resistor 50 and the capacitor 49, which may be for example 300 ms as compared with 10 ms for the last-mentioned components, depending upon the illumination intensity required for the dipped beam filaments 13.

The power switching circuit 41 includes a transistor 56 whose base is connected to the output terminal of the oscillator circuit 40 by way of a resistor 57. The collector of the transistor 56 is connected by way of a resistor 58 to a Darlington transistor 59, the latter having its emitter connected to a point 60 between the warning lamp 24 and the ignition switch 23. The collector of transistor 59 is connected by way of resistors 61 and 62 to the dipped beam filaments 13 of the headlamps 11, the connection point between the resistors 61 and 62 being coupled to the emitter of a transistor 63 via a resistor 64 and a diode 65. The base of the transistor 63 is connected to the collector of the transistor 56 by way of a resistor 66, while the collector of the transistor 63 is connected to the base of a transistor 67. This last-mentioned transistor has its emitter connected to a connection point between a zener diode 68 and a resistor 69, these latter components being connected in series with the main beam filaments 12. The collector of the transistor 67 is connected via a resistor 70 to the base of a further Darlington transistor 71. The collector emitter path of the Darlington transistor 71 is connected directly between the ignition switch 23 and the dipped beam filaments 13.

When a voltage pulse appears at the output terminal of the oscillator circuit 40, the transistor 56 is turned on and allows base current to flow out of the Darlington transistor 59. Collector current will then flow from the transistor 59 to the dipped beam filaments 13 via the resistors 61 and 62. Initially, the filaments 13 are cold and have a very low resistance, typically 0.25 ohms. If the resistors 61 and 62 were not provided then the inrush current to the cold filaments would be much higher than the rated current of the Darlington transistor 59 (being for example as much as 50 amps). The resistors 61 and 62 serve to limit this initial current to a safe value, e.g. 6 amps.

While the dipped beam filaments 13 are still cold, the voltage at the connection point between the resistors 61 and 62 is at such a value that current can flow through the base-emitter junction of the transistor 63 by way of the resistor 64, the diode 65 and the resistor 66, but not through the emitter-collector path of the transistor 63. However, as the dipped beam filaments heat up, their resistance increases thereby causing the voltage at the connection point between the resistors 61 and 62 to rise. When this voltage has risen sufficiently, current will flow via the resistor 64, the diode 65 and the emitter-collector path of the transistor 63 into the base of the transistor 67, thereby turning the latter on. Earlier conduction of the transistor 67 is also prevented by the magnitude of the voltage generated at the junction between the zener diode 68 and the resistor 69 to which the emitter of the transistor 67 is connected. Since the transistor 67 is now conducting, base current can flow out of the Darlington transistor 71, thereby turning the latter on so that the full operational voltage is then developed across the dipped beam filaments 13.

When the other Darlington transistor 59 first switches on, inductance in the circuit to the dipped beam filaments 13 will result in the voltage at the connection point between the resistors 61 and 62 momentarily rising to a relatively high value. In order to prevent this transient voltage from switching on the Darlington transistor 71 while the dipped beam filaments 13 are still cold, a capacitor 72 is connected between the anode of the diode 65 and the anode of the diode 47. The capacitor 72 must charge via the Darlington transistor 59 and the resistors 61 and 64 before the transistor 63 will conduct, and the time constant of this discharging operation is made long enough to ensure that the aforementioned transient voltage does not cause premature turning on of the Darlington transistor 71.

At the end of the voltage pulse from the oscillator circuit 40, the transistor 56 will switch off, thereby causing the Darlington transistors 59 and 71 to switch off also so that current supply to the dipped beam filaments 13 is suspended until the start of the next voltage pulse.

Where the voltage pulses from the oscillator circuit 40 have a small mark/space ratio as mentioned previously, then the increased width of the first pulse will ensure that the dipped beam filaments 13 are energised long enough for them to become heated up. If the width of the first pulse were not to be increased in the above-described manner, then there is a danger that the filaments 13 would never heat up sufficiently to bring the Darlington transistor 71 into operation.

A capacitor 73 is connected between the emitters of the Darlington transistors 59, 71 and the feed to the dipped beam filaments 13 in order to protect the system from external voltage transients.

Obviously, it is desirable that the power switching circuit 41 should not operate in the event that the dipped beam filaments 13 become short-circuited. However, it is not possible to use the resistance across the dipped beam filaments to determine whether or not a short-circuit is present, since the resistance of healthy filaments is practically zero when they are cold anyway. It is for this reason that the circuit 42 is provided.

The circuit 42 comprises a capacitor 74 and a resistor 75 connected in series between the output of the previously-described stabilised power supply and the collector of the Darlington transistor 71, the resistor 75 being connected in parallel with a series circuit of a resistor 76 and a diode 77. The connection point between the capacitor 74 and the resistor 75 is coupled on the one hand by way of a resistor 78 to the main beam filaments 12 and on the other hand by way of a resistor 79 to the base of a transistor 80. The collector of the transistor 80 is connected to the output of the stabilised voltage supply via a resistor 81, while its emitter is connected to the anode of the diode 47. A further transistor 82 has its base connected to the collector of the transistor 80 and its collector-emitter path connected between the diode 47 and a point between the resistor 57 and the transistor 56.

Under normal operating conditions, the voltage across the Darlington transistor 71 will switch between a relatively low value (e.g. 1.4 volts) when on and a relatively high value (e.g. 12 volts) when off. During the "off" period the capacitor 74 will charge via the resistor 75: during the "on" period the capacitor 74 will discharge by way of the resistor 43, the warning lamp 24, the emitter-collector path of the Darlington transistor 71, the resistor 76 and the diode 77. The time constant for charging is made significantly larger than that for discharging, and both of these are much longer than the periodic time of the oscillator circuit 40. This results in the voltage waveform across the capacitor 74 lying within a range (e.g. between 2 and 4 volts) which is sufficient to maintain the transistor 80 in continuous conduction. The collector voltage of the transistor 80 as applied to the base of the transistor 82 is therefore low enough to clamp the latter transistor in a non-conductive state.

In the event of there being a short-circuit across the dipped beam filaments 13, the voltage at the connection point between the resistors 61 and 62 will not rise in the manner described previously, and therefore the Darlington transistor 71 will not be switched on although the other Darlington transistor 59 will pulse as before and feed current into the short-circuit by way of the resistors 61 and 62. Under these conditions, the capacitor 74 will charge continuously via the resistor 75: when the capacitor 74 becomes fully charged, it will no longer be able to feed base current into the transistor 80, which will therefore turn off and remove the clamp from the transistor 82. This latter transistor will then conduct and thereby clamp the base of the transistor 56, so that the flow of base current from the Darlington transistor 59 is permanently suspended and the latter remains turned off.

Once the short-circuit has been removed, the lighting system will remain in a quiescent state until either the ignition switch 23 or the sidelights 10 are turned off. This will cause the output of the stabilised power supply to drop to a low level or zero, whereupon the capacitor 74 will discharge via the resistor 43, the alternator 25, the dipped beam filaments 13, the resistor 76 and the diode 77 (in the case where the ignition switch is turned off), or via the diode 46, the sidelights 10, the dipped beam filaments 13, the resistor 76 and the diode 77 (in the case where the sidelights are turned off). When the ignition switch or the sidelights are turned on again, the output of the stabilised power supply will return to its normal operational level and the system will resume its normal functioning.

The resistor 78 is provided to prevent the capacitor 74 from charging to the point where the transistor 82 is turned on when the main beam filaments are energised, so that the circuit 42 does not sense the cold dipped beam filaments as being short-circuited under this condition. This ensures that the oscillator circuit will revert to normal operation and cause pulsing of the dipped beam filaments as soon as the main beam filaments are switched off.

Although the inclusion of the resistor 78 allows the capacitor 74 to charge more during normal operation of the system than would be the case if the resistor 78 were omitted, the values of the various circuit components can be chosen to ensure that this does not present any problems.

From the above description, it will be appreciated that the circuits 40, 41 and 42 are additional to the usual components of the vehicle lighting system and in no way interfere with these components. The power dissipation within these circuits is very low compared with the use of a series resistor, and hence the system can operate at a much higher efficiency.

The lighting system shown in Figure 3 is suitable for both 12 volt and 24 volt operation.

Above, there have been described two basic ways of achieving dimming of the dipped beam filaments when these are energised by virtue of the sidelights having been switched on, namely by means of a series resistor on the one hand and a pulsed electrical supply on the other hand. However, it is also possible to achieve such dimming of the dipped beam by using special headlamp bulbs which contain three separate filaments, namely a main beam filament, a normal dipped beam filament (which is energised by way of the switches 14, 16 and the switch contacts 17, 18) and a subsidiary dipped beam filament which is energised when the sidelights are switched on and which has a lower intensity than that of the normal dipped beam filaments.

## Claims

1.  A lighting system for a vehicle having an engine and a charging circuit therefor, the lighting system comprising sidelights (10) in a sidelights circuit, headlamps (11) having main beam filaments (12) in a main beam circuit and dipped beam filaments (13), sensor means (20,40) responsive <u>inter alia</u>

to a first voltage at a predetermined point (37) in the charging circuit and to a second voltage at a predetermined point (27) in the main beam circuit, and switching means (28,41) responsive to the sensor means (20,40) to control current flow to the dipped beam filaments (13) such that these filaments are automatically energised when the sidelights (10) are energised and are automatically de-energised when either the sidelights (10) are subsequently de-energised or the main beam filaments (12) are energised, characterised in that the predetermined point (37) in the charging circuit is a point at which the voltage varies as the speed of the engine increases, in that- the sensor means (20,40) is also responsive to a third voltage at a predetermined point (15) in the sidelights circuit, and in that the sensor means (20,40) is connected to said predetermined point (15) in the sidelights circuit by way of a diode (21,46) which places a voltage clamp on the sensor means (20,40) to prevent the switching means (28,41) from operating until the speed of the engine is sufficient to cause the first voltage to pass through a preselected level the second voltage is ate level corresponding to the main beam filaments being de-energised and the third voltage is at a level corresponding to the sidelights (10) being energised.

2. A lighting system as claimed in claim 1, further comprising a switch device (14,16,17,18) which is manually operable to energise the dipped beam filaments (13) of the headlamps (11), the dipped beam filaments (13) being operated at substantially the same intensity when energised through-the switching means as is the case when they are energised by said switch device (14,16,17,18).

3. A lighting system as claimed in claim 1, further comprising a switch device (14,16,17,18) which is manually operable to energise the dipped beam filaments (13) of the headlamps (11), the dipped beam filaments (13) being operated at a reduced intensity when energised through the switching means than is the case when they are energised by said switch device (14,16,17,18).

4. A lighting system as claimed in claim 3, wherein the reduction in intensity is achieved by means of a resistance (34) connected in series between said switching means and said dipped beam filaments (13).

5. A lighting system as claimed in claim 3, wherein the dipped beam filaments (13) are energised by means of a pulsed electrical signal, and the reduction of intensity is achieved by varying the mark/space ratio of the pulses in said signal.

6. A lighting system as claimed in claim 1, wherein each headlamp (11) comprises a main beam filament, a first dipped beam filament which is energised through said switching means, and a second dipped beam filament which is energised by means of a manually operable switch, the first dipped beam filament being arranged to emit light at a lower intensity than the second dipped beam filament.

7. A lighting system as claimed in claim 1, wherein the sensor means includes an oscillator (40) producing output pulses, and the switching means comprises a power switching circuit (41) which is driven by the oscillator (40) and which supplies pulses of electrical power to the dipped beam filaments (13).

8. A lighting system as claimed in claim 7, wherein an initial output pulse from the oscillator (40) is of substantially longer duration than subsequent output pulses therefrom.

9. A lighting system as claimed in claim 7 or 8, wherein the switching circuit (41) includes first semiconductor switching means (59) by means of which pulses are supplied to the dipped beam filaments (13) when the latter are cold, and second semiconductor switching means (71) by means of which pulses are supplied to the dipped beam filaments (13) after the latter have heated up.

10. A lighting system as claimed in claim 9, wherein the pulses supplied by the first semiconductor switching means (59) are reduced in power as compared with the pulses supplied by the second semiconductor switching means (71).

11. A lighting system as claimed in claim 9 or 10, wherein a resistance is provided in series between the first semiconductor switching means (59) and the dipped beam filaments (13) to limit the initial inrush current to the latter to a value below the rated current of the first semiconductor switching means (59).

12. A lighting system as claimed in claim 9, 10 or 11, wherein a control terminal of the second semiconductor switching means (71) is connected to the main conduction path of a semiconductor switching element (67), the switching element (67) being rendered conductive in response to an increase in the voltage drop across the dipped beam filaments (13) as the latter heats up.

13. A lighting system as claimed in claim 12, wherein a control terminal of the switching element (67) is connected to the main conduction path of a further semiconducting switching element (63), and a charging circuit (72,61,64) prevents said further switching element (63) from becoming conductive until a predetermined time delay after the first semiconductor switching means (59) supplies an initial pulse to the dipped beam filaments (13).

14. A lighting system as claimed in any one of claims 7 to 13, further comprising a control circuit (42) which renders the power switching circuit (41) inoperative in response to the dipped beam filaments (13) being short-circuited.

15. A lighting system as claimed in claim 14, when appended to claim 10, wherein the control circuit (42) includes a charging unit (74,75,76) which discharges when the second semiconductor switching means (71) supplies a pulse to the dipped beam filaments (13) and charges during the interpulse period, the time constant for such charging being substantially greater than the period of the output pulses from the oscillator (40), and a disabling circuit (80,82) is provided to disable the power switching circuit (41) in the event that the charging circuit (74,75,76) charges beyond a predetermined amount, corresponding to the second semiconductor switching means (71) being out of operation for longer than the time normally taken for the dipped beam filaments (13) to heat up.

16. A lighting system as claimed in claim 15, wherein a control terminal of the first semiconductor switching means (59) is connected to the main conduction path of a semiconductor switching element (56), the output pulses from the oscillator are applied to a control terminal of the switching element (56), and the disabling circuit (80,82) is arranged to render the switching element (56) non-conductive in the event of the charging circuit (74, 75,76) charging beyond said predetermined amount.

17. A lighting system as claimed in claim 16, wherein the disabling circuit includes a further semiconductor switching element (82) having its main conduction path connected to the control terminal of the first-mentioned switching element (56), the further switching element (82) normally being non-conductive but being rendered conductive by charging of the charging circuit (74,75,76) beyond said predetermined amount.

18. A lighting system as claimed in claim 1, wherein the sensor means comprises a relay coil (20) and the switching means comprises a relay switch contact (28) operated by the relay coil.

19. A lighting system as claimed in claim 18, wherein a diode (30) is connected electrically in parallel with the relay coil (20) to suppress inductive voltages.

20. A lighting system is claimed in claim 18 or 19, wherein a capacitor (31) is connected electrically in parallel with the relay switch contact (28) to suppress arcing.

21. A lighting system as claimed in claim 18, 19 or 20, wherein a first switch (14) is operable to energise the sidelights (10), a second switch (17,18,19) is operable to energise selectively the main beam filaments (12) and the dipped beam filaments (13), and the relay switch contact (28) is electrically connected between a power supply and a point (29) between the second switch (17,18,19) and the dipped beam filaments (13).

22. A lighting system for a vehicle having an engine and a charging circuit therefor, the lighting system comprising sidelights (10) in a sidelights circuit, headlamps (11) having main beam filaments (12) in a main beam circuit and dipped beam filaments (13), sensor means (20) responsive inter alia to a first voltage at a predetermined point (37) in the charging circuit and to a second voltage at a predetermined point (27) in the main beam circuit, and switching means (28) responsive to the sensor means (20) to control current flow to the dipped beam filaments (13) such that these filaments are automatically energised when the sidelights (10) are energised and are automatically de-energised when either the sidelights (10) are subsequently de-energised or the main beam filaments (12) are energised, characterised in that the predetermined point (37) in the charging circuit is a point at which the voltage varies as the speed of the engine increases, in that the sensor means (20) is also responsive to a third voltage at a predetermined point (15) in the sidelights circuit, and in that the sensor means (20) is connected between said predetermined point (15) in the sidelights circuit and the main conduction path of a transistor (35), the base of the transistor (35) being connected to said predetermined point (37) in the charging circuit, the voltage drop across the sensor means (20) being insufficient to cause the switching means (28) to operate unless the speed of the engine is sufficient to cause the first voltage to pass through a preselected level, the second voltage is at a level corresponding to the main beam filaments being de-energised, and the third voltage is at a level corresponding to the sidelights (10) being energised.

9

**Patentansprüche**

1. Lichtanlage für ein mit einem Motor und einem Ladeschaltkreis ausgerüstetes Fahrzeug, mit Seitenbegrenzungsleuchten (10) in einem Seitenbegrenzungsleuchten-Schaltkreis, mit Frontscheinwerfer (11), die Fernlicht-Glühfäden (12) in einem Fernlicht-Schaltkreis und Abblendlicht-Glühfäden (13) besitzen, mit Sensormitteln (20,40), die unter anderem auf eine erste Spannung an einem bestimmten Punkt (37) im Ladeschaltkreis und auf eine zweite Spannung an einem bestimmten Punkt (27) im Abblendlicht-Schaltkreis reagieren, und mit Schaltermitteln (28,41), die auf die Sensormittel (20,40) reagieren und dadurch den Stromfluß zu den Abblendlicht-Glühfäden (13) derart steuern, daß diese Glühfäden automatisch zugeschaltet werden, wenn die Seitenbegrenzungsleuchten (10) zugeschaltet werden, und automatisch abgeschaltet werden, wenn entweder die Seitenbegrenzungsleuchten (10) danach abgeschaltet oder die Fernlicht-Glühfäden (12) zugeschaltet werden, **dadurch gekennzeichnet,** daß der bestimmte Punkt (37) im Ladeschaltkreis ein Punkt ist, an dem die Spannung sich ändert, wenn die Geschwindigkeit des Motors zunimmt, daß die Sensormittel (20,40) auch auf eine dritte Spannung an einem bestimmten Punkt (15) im Seitenbegrenzungsleuchten-Schaltkreis reagieren und daß die Sensormittel (20,40) mit dem bestimmten Punkt (15) im Seitenbegrenzungsleuchten-Schaltkreis über eine Diode (21,46) verbunden sind, welche eine Spannungsblockierung gegenüber den Sensormitteln (20,40) vornimmt, um zu verhindern, daß die Schaltermittel (28,41) schalten, bis die Geschwindigkeit des Motors ausreichend ist, und bewirkt, daß die erste Spannung einen vorbestimmten Pegel überschreitet, die zweite Spannung auf einem Pegel ist, der den abgeschalteten Fernlicht-Glühfäden entspricht, und die dritte Spannung auf einem Pegel ist, der den zugeschalteten Seitenbegrenzungsleuchten (10) entspricht.

2. Lichtanlage nach Anspruch 1, dadurch gekennzeichnet, daß sie ferner eine Schaltervorrichtung (14,16,17,18) aufweist, die von Hand betätigbar ist, um die Abblendlicht-Glühfäden (13) der Frontscheinwerfer (11) zuzuschalten, wobei die Abblendlicht-Glühfäden (13), wenn sie durch die Schaltermittel zugeschaltet sind, mit im wesentlichen derselben Intensität betrieben werden, wie wenn sie durch die Schaltervorrichtung (14,16,17,18) zugeschaltet sind.

3. Lichtanlage nach Anspruch 1, dadurch gekennzeichnet, daß sie ferner eine Schaltervorrichtung (14,16,17,18) aufweist, die von Hand betätigbar ist, um die Abblendlicht-Glühfäden (13) der Frontscheinwerfer (11) zuzuschalten, wobei die Abblendlicht-Glühfäden (13), wenn sie durch die Schaltermittel zugeschaltet sind, bei verringerter Intensität betrieben werden, wie wenn sie durch die Schaltervorrichtung (14,16,17,18) zugeschaltet sind.

4. Lichtanlage nach Anspruch 3, dadurch gekennzeichnet, daß die Verringerung der Intensität mittels eines Widerstandes (34) erreicht ist, der in Reihe zwischen den Schaltermitteln und den Abblendlicht-Glühfäden (13) angeordnet ist.

5. Lichtanlage nach Anspruch 3, dadurch gekennzeichnet, daß die Abblendlicht-Glühfäden (13) mit Hilfe eines impulsförmigen elektrischen Signals zugeschaltet werden und daß die Verringerung der Intensität dadurch erreicht ist, daß das Tastverhältnis der Impulse in diesem Signal verändert wird.

6. Lichtanlage nach Anspruch 1, dadurch gekennzeichnet, daß jeder Frontscheinwerfer (11) einen Fernlicht-Glühfaden, einen ersten Abblendlicht-Glühfaden, der durch die Schaltermittel zugeschaltet wird, und einen zweiten Abblendlicht-Glühfaden aufweist, der mit Hilfe eines von Hand betätigbaren Schalters zugeschaltet wird, wobei der erste Abblendlicht-Glühfaden derart angeordnet ist, daß er Licht bei einer geringeren Intensität als der zweite Abblendlicht-Glühfaden abgibt.

7. Lichtanlage nach Anspruch 1, dadurch gekennzeichnet, daß die Sensormittel einen Oszillator (40), der Ausgangsimpulse erzeugt, und die Schaltermittel einen Leistungsschalter-Schaltkreis (41), der von dem Oszillator (40) angesteuert ist und der elektrische Leistungsimpulse an die Abblendlicht-Glühfäden (13) abgibt, aufweisen.

8. Lichtanlage nach Anspruch 7, dadurch gekennzeichnet, daß ein Anfangs-Ausgangsimpuls vom Oszillator (40) von im wesentlichen längerer Dauer ist als die folgenden Ausgangsimpulse.

9. Lichtanlage nach Anspruch 7 oder 8, dadurch gekennzeichnet, daß der Schalter-Schaltkreis (41) einen ersten Halbleiter-Schalter (59), mit dessen Hilfe Impulse den Abblendlicht-Glühfäden (13) zugeführt werden, wenn sie kalt sind, und einen zweiten Halbleiter-Schalter (71) aufweist, mit dessen Hilfe Impulse den Abblendlicht-Glühfäden (13) zugeführt werden, nachdem sie erwärmt sind.

**10.** Lichtanlage nach Anspruch 9, dadurch gekennzeichnet, daß die Impulse, die vom ersten Halbleiter-Schalter (59) zugeführt sind, verglichen mit den Impulsen, die vom zweiten Halbleiter-Schalter (71) zugeführt sind, in der Leistung reduziert sind.

**11.** Lichtanlage nach Anspruch 9 oder 10, dadurch gekennzeichnet, daß ein Widerstand in Reihe zwischen dem ersten Halbleiter-Schalter (59) und den Abblendlicht-Glühfäden (13) vorgesehen ist, um den anfänglichen Einschaltstromstoß zu den letzteren auf einen Wert unterhalb des Nennstromes des ersten Halbleiter-Schalters (59) zu begrenzen.

**12.** Lichtanlage nach einem der Ansprüche 9, 10 oder 11, dadurch gekennzeichnet, daß eine Steuerklemme des zweiten Halbleiter-Schalters (71) mit dem Hauptleitungsweg eines Halbleiter-Schalterelementes (67) verbunden ist, das bei einem Anwachsen des Spannungsabfalls über den Abblendlicht-Glühfäden (13) dann, wenn diese erwärmt sind, leitend gemacht wird.

**13.** Lichtanlage nach Anspruch 12, dadurch gekennzeichnet, daß eine Steuerklemme des Schalterelementes (67) mit dem Hauptleitungsweg eines weiteren Halbleiter-Schalterelementes (63) verbunden ist, und daß ein Ladeschaltkreis (72,61,64) verhindert, daß dieses weitere Schalterelement (63) leitend wird, bis eine vorbestimmte Zeit verstrichen ist, nachdem der erste Halbleiter-Schalter (59) einen Anfangsimpuls an die Abblendlicht-Glühfäden (13) abgibt.

**14.** Lichtanlage nach Anspruch 7, dadurch gekennzeichnet, daß sie ferner einen Steuerschaltkreis (42) aufweist, der den Leistungsschalter-Schaltkreis (41) abschaltet, wenn die Abblendlicht-Glühfäden (13) kurzgeschlossen sind.

**15.** Lichtanlage nach Anspruch 14 dann, wenn dieser von Anspruch 10 abhängig ist, dadurch gekennzeichnet, daß der Steuerkreis (42) eine Ladeeinheit (74,75,76) aufweist, die sich dann entlädt, wenn der zweite Halbleiter-Schalter (71) den Abblendlicht-Glühfäden einen Impuls zuführt und während der Zwischenimpulsperiode auflädt, wobei die Zeitkonstante für dieses Laden im wesentlichen größer ist als die Periode der Ausgangsimpulse vom Oszillator (40), und daß ein Sperrschaltkreis (80,82) vorgesehen ist, um den Leistungsschalter-Schaltkreis (41) in dem Falle zu sperren, in dem der Ladeschaltkreis (74,75,76) über einen bestimmten Wert hinaus lädt, und zwar entsprechend dem zweiten Halbleiter-Schalter (71), der für eine längere Zeit außer Betrieb ist als der Zeit entspricht, in der die Abblendlicht-Glühfäden (13) normalerweise erwärmt sind.

**16.** Lichtanlage nach Anspruch 15, dadurch gekennzeichnet, daß eine Steuerklemme des ersten Halbleiter-Schalters (59) mit dem Hauptleitungsweg eines Halbleiter-Schalterelementes (56) verbunden ist, daß die Ausgangsimpulse vom Oszillator einer Steuerklemme des Schalterelementes (56) zugeführt sind und daß der Sperrschaltktreis (80,82) derart angeordnet ist, daß das Schalterelement (56) dann nicht leitend gemacht wird, wenn der Ladeschaltkreis (74,75,76) über den vorbestimmten Wert hinaus lädt.

**17.** Lichtanlage nach Anspruch 16, dadurch gekennzeichnet, daß der Sperrschaltkreis ein weiteres Halbleiter-Schalterelement (82) aufweist, dessen Hauptleitungsweg mit der Steuerklemme des erstgenannten Schalterelementes (56) verbunden ist, wobei das weitere Schalterelement (82), das normalerweise nichtleitend ist, durch Laden des Ladeschaltkreises (74,75,76) über den vorbestimmten Betrag hinaus leitend gemacht wird.

**18.** Lichtanlage nach Anspruch 1, dadurch gekennzeichnet, daß die Sensormittel eine Relaisspule (20) und die Schaltermittel einen Relaisschalterkontakt (28), der von der Relaisspule betätigt ist, aufweisen.

**19.** Lichtanlage nach Anspruch 18, dadurch gekennzeichnet, daß zur Unterdrückung von induktiven Spannungen eine Diode (30) elektrisch parallel zu Relaisspule (20) angeordnet ist.

**20.** Lichtanlage nach Anspruch 18 oder 19, dadurch gekennzeichnet, daß zur Unterdrückung von Lichtbogen ein Kondensator (31) parallel zum Relaisschalterkontakt (28) angeordnet ist.

**21.** Lichtanlage nach einem der Ansprüche 18, 19 oder 20, dadurch gekennzeichnet, daß ein erster Schalter (14) zum Zuschalten der Seitenbegrenzungsleuchten (10) betätigbar ist, daß ein zweiter Schalter (17,18,19) zum selektiven Einschalten der Fernlicht-Glühfäden (12) und der Abblendlicht-Glühfäden (13) betätigbar ist und daß der Relaisschalterkontakt (28) elektrisch zwischen einer Spannungsquelle und einem Punkt (29) zwischen dem zweiten Schalter (17,18,19) und den Abblendlicht-Glühfäden (13) elektrisch angeordnet ist.

**22.** Lichtanlage für ein mit einem Motor und einem Ladeschaltkreis ausgerüstetes Fahrzeug, mit Seitenbegrenzungsleuchten (10) in einem Seitenbegrenzungsleuchten-Schaltkreis, mit Frontscheinwerfer (11), die Fernlicht-Glühfäden (12) in einem Fernlicht-Schaltkreis und Abblendlicht-Glühfäden (13) besitzen, mit Sensormitteln (20), die unter anderem auf eine erste Spannung an einem bestimmten Punkt (37) im Ladeschaltkreis und auf eine zweite Spannung an einem bestimmten Punkt (27) im Abblendlicht-Schaltkreis reagieren, und mit Schaltermitteln (28), die auf die Sensormittel (20) reagieren und dadurch den Stromfluß zu den Abblendlicht-Glühfäden (13) derart steuern, daß diese Glühfäden automatisch zugeschaltet werden, wenn die Seitenbegrenzungsleuchten (10) zugeschaltet werden, und automatisch abgeschaltet werden, wenn entweder die Seitenbegrenzungsleuchten (10) danach abgeschaltet oder die Fernlicht-Glühfäden (12) zugeschaltet werden, dadurch gekennzeichnet, daß der bestimmte Punkt (37) im Ladeschaltkreis ein Punkt ist, an dem die Spannung sich ändert, wenn die Geschwindigkeit des Motors zunimmt, daß die Sensormittel (20) auch auf eine dritte Spannung an einem bestimmten Punkt (15) im Seitenbegrenzungsleuchten-Schaltkreis reagieren und daß die Sensormittel (20) zwischen dem bestimmten Punkt (15) im Seitenbegrenzungsleuchten-Schaltkreis und dem Hauptleitungsweg eines Transistors (35) angeordnet sind, wobei die Basis des Transistors (35) mit dem bestimmten Punkt (37) im Ladeschaltkreis verbunden ist und wobei der Spannungsabfall über den Sensormitteln (20) unzureichend ist, um zu erreichen, daß die Schaltermittel (28) betätigt werden, wenn nicht die Geschwindigkeit des Motors ausreichend ist und bewirkt, daß die erste Spannung einen vorbestimmten Pegel überschreitet, die zweite Spannung auf einem Pegel ist, der den abgeschalteten Fernlicht-Glühfäden entspricht, und die dritte Spannung auf einem Pegel ist, der den zugeschalteten Seitenbegrenzungsleuchten (10) entspricht.

**Revendications**

1.  Système d'éclairage pour un véhicule comportant un moteur et un circuit de charge pour ce moteur, le système d'éclairage comprenant des feux de position (10) dans un circuit de feux de position, des projecteurs (11) comportant des filaments de feux de route (12) dans un circuit de feux de route et des filaments de feux de croisement (13), un moyen de détection (20, 40) réagissant notamment à une première tension en un point prédéterminé (37) dans le circuit de charge et à une deuxième tension en un point prédéterminé (27) dans le circuit des feux de route, et un moyen d'interruption (28, 41) réagissant au moyen de détection (20, 40) pour commander le passage du courant aux filaments (13) des feux de croisement, de telle façon que ces filaments soient automatiquement allumés lorsque les feux de position (10) sont allumés et soient automatiquement éteints lorsque les feux de position (10) sont ultérieurement éteints ou que les filaments (12) des feux de route sont allumés, caractérisé en ce que le point prédéterminé (37) dans le circuit de charge est un point où la tension varie à mesure que le régime du moteur augmente, que le moyen de détection (20, 40) réagit également à une troisième tension en un point prédéterminé (15) dans le circuit des feux de position, et que le moyen de détection (20, 40) est connecté au point prédéterminé (15) dans le circuit des feux de position par l'intermédiaire d'une diode (21, 46) qui place un verrouillage de tension sur le moyen de détection (20, 40) pour empêcher le moyen d'interruption (28, 41) de fonctionner jusqu'à ce que le régime du moteur soit suffisant pour amener la première tension à passer par un niveau présélectionné, que la deuxième tension soit à un niveau correspondant à l'extinction des filaments des feux de route et que la troisième tension soit à un niveau correspondant à l'allumage des feux de position (10).

2.  Système d'éclairage suivant la revendication 1, comprenant en outre un dispositif de commutation (14, 16, 17, 18) qui peut être actionné manuellement pour allumer les filaments (13) des feux de croisement des projecteurs (11), les filaments (13) des feux de croisement étant mis en oeuvre en substance à la même intensité lorsqu'ils sont allumés par l'intermédiaire du moyen d'interruption, que lorsqu'ils sont allumés par le dispositif de commutation (14, 16, 17, 18).

3.  Système d'éclairage suivant la revendication 1, comprenant en outre un dispositif de commutation (14, 16, 17, 18) qui peut être actionné manuellement pour allumer les filaments (13) des feux de croisement des projecteurs (11), les filaments (13) des feux de croisement, lorsqu'ils sont allumés par le moyen d'interruption, étant mis en oeuvre à une intensité inférieure à celle obtenue lorsqu'ils sont allumés par le dispositif de commutation (14, 16, 17, 18).

4.  Système d'éclairage suivant la revendication 3, dans lequel la réduction d'intensité est réalisée au moyen d'une résistance (34) connectée en série entre le moyen d'interruption et les filaments (13) des feux de croisement.

5.  Système d'éclairage suivant la revendication 3, dans lequel les filaments (13) des feux de croisement sont allumés au moyen d'un signal électrique pulsé et la réduction d'intensité est réalisée par modification du rapport des temps des impulsions dans le signal.

6. Système d'éclairage suivant la revendication 1, dans lequel chaque projecteur (11) comprend un filament de feu de route, un premier filament de feu de croisement qui est allumé par l'intermédiaire du moyen d'interruption et un second filament de feu de croisement qui est allumé au moyen d'un interrupteur à main, le premier filament de feu de croisement étant prévu pour émettre de la lumière à une intensité moindre que le second filament de feu de croisement.

7. Système d'éclairage suivant la revendication 1, dans lequel le moyen de détection comprend un oscillateur (40) produisant des impulsions de sortie et le moyen d'interruption comprend un circuit de commutation de courant (41) qui est piloté par l'oscillateur (40) et qui fournit des impulsions de courant électrique aux filaments (13) des feux de croisement.

8. Système d'éclairage suivant la revendication 7, dans lequel une impulsion de sortie initiale de l'oscillateur (40) est d'une durée nettement supérieure à celle des impulsions de sortie suivantes de cet oscillateur.

9. Système d'éclairage suivant la revendication 7 ou 8, dans lequel le circuit de commutation (41) comprend un premier moyen de commutation à semi-conducteur (59) au moyen duquel des impulsions sont fournies aux filaments (13) des feux de croisement lorsqu'ils sont froids, et un second moyen de commutation à semi-conducteur (71) au moyen duquel des impulsions sont fournies aux filaments (13) des feux de croisement lorsqu'ils se sont échauffés.

10. Système d'éclairage suivant la revendication 9, dans lequel les impulsions fournies par le premier moyen de commutation à semi-conducteur (59) sont d'une puissance réduite par rapport à celles fournies par le second moyen de commutation à semi-conducteur (71).

11. Système d'éclairage suivant la revendication 9 ou 10, dans lequel une résistance est prévue en série entre le premier moyen de commutation à semi-conducteur (59) et les filaments (13) des feux de croisement pour limiter le courant d'entrée initial de ces filaments à une valeur inférieure au courant nominal du premier moyen de commutation à semi-conducteur (59).

12. Système d'éclairage suivant la revendication 9, 10 ou 11, dans lequel une borne de commande du second moyen de commutation à semi-conducteur (71) est connectée au trajet de conduction principal d'un élément de commutation à semi-conducteur (67), l'élément de commutation (67) étant rendu conducteur en réaction à une augmentation de la chute de tension au passage des filaments (13) des feux de croisement à mesure qu'ils s'échauffent

13. Système d'éclairage suivant la revendication 12, dans lequel une borne de commande de l'élément de commutation (67) est connectée au trajet de conduction principal d'un autre élément de commutation à semi-conducteur (63) et un circuit de charge (72, 61, 64) empêche cet autre élément de commutation (63) de devenir conducteur pendant un intervalle de temps prédéterminé après que le premier moyen de commutation à semi-conducteur (59) a fourni une impulsion initiale aux filaments (13) des feux de croisement.

14. Système d'éclairage suivant l'une quelconque des revendications 7 à 13, comprenant en outre un circuit de commande (42) qui rend le circuit de commutation électrique (41) inactif en réaction au court-circuitage des filaments (13) des feux de croisement.

15. Système d'éclairage suivant la revendication 14, découlant de la revendication 10, dans lequel le circuit de commande (42) comprend une unité de charge (74, 75, 76) qui se décharge lorsque le second moyen de commutation à semi-conducteur (71) fournit une impulsion aux filaments (13) des feux de croisement et se charge pendant la période entre des impulsions, la constante de temps pour une telle charge étant sensiblement supérieure à la période des impulsions de sortie de l'oscillateur (40), et un circuit d'invalidation (80, 82) est prévu pour invalider le circuit de commutation électrique (41) au cas où le circuit de charge (74, 75, 76) se charge au-delà d'une valeur prédéterminée correspondant à la mise hors fonction du second moyen de commutation à semi-conducteur (71) pendant un laps de temps supérieur au temps normalement mis par les filaments (13) des feux de croisement à s'échauffer.

16. Système d'éclairage suivant la revendication 15, dans lequel une borne de commande du premier moyen de commutation à semi-conducteur (59) est connectée au trajet de conduction principal d'un élément de commutation à semi-conducteur (56), les impulsions de sortie de l'oscillateur sont appliquées à une borne de commande de l'élément de commutation (56) et le circuit d'invalidation (80, 82) est prévu pour rendre l'élément de commutation (56) non conducteur dans le cas où le circuit de charge (74, 75, 76) se charge au-delà de la valeur prédéterminée.

17. Système d'éclairage suivant la revendication 16, dans lequel le circuit d'invalidation comprend un autre élément de commutation à semi-conducteur (82) dont le trajet de conduction principal est connecté à la borne de commande du premier élément de commutation (56), l'autre élément de commutation (82) étant normalement non conducteur, mais étant rendu conducteur par le fait que le circuit de charge (74, 75, 76) se charge au-delà de la valeur prédéterminée.

18. Système d'éclairage suivant la revendication 1, dans lequel le moyen de détection comprend une bobine de relais (20) et le moyen de commutation comprend un contact d'interrupteur à relais (28) actionné par la bobine de relais.

19. Système d'éclairage suivant la revendication 18, dans lequel une diode (30) est connectée électriquement en parallèle avec la bobine de relais (20) pour supprimer les tensions inductives.

20. Système d'éclairage suivant la revendication 18 ou 19, dans lequel un condensateur (31) est connecté électriquement en parallèle avec le contact d'interrupteur à relais (28) pour supprimer la formation d'arcs.

21. Système d'éclairage suivant la revendication 18, 19 ou 20, dans lequel un premier interrupteur (14) peut être actionné pour allumer les feux de position (10), un commutateur (17, 18, 19) peut être actionné pour actionner sélectivement les filaments (12) des feux de route et les filaments (13) des feux de croisement et le contact d'interrupteur à relais (28) est connecté électriquement entre une alimentation électrique et un point (29) situé entre le commutateur (17, 18, 19) et les filaments (13) des feux de croisement.

22. Système d'éclairage pour un véhicule comportant un moteur et un circuit de charge pour ce moteur, le système d'éclairage comprenant des feux de position (10) dans un circuit de feux de position, des projecteurs (11) comportant des filaments de feux de route (12) dans un circuit de feux de route et des filaments de feux de croisement (13), un moyen de détection (20) réagissant notamment à une première tension en un point prédéterminé (37) dans le circuit de charge et à une seconde tension en un point prédéterminé (27) dans le circuit de feux de route, et un moyen d'interruption (28) réagissant au moyen de détection (20) pour commander le passage du courant vers les filaments (13) des feux de croisement, de telle sorte que ces filaments soient automatiquement allumés lorsque les feux de position (10) sont allumés et soient automatiquement éteints lorsque les feux de position (10) sont ultérieurement éteints ou que les filaments (12) des feux de route sont allumés, caractérisé en ce que le point prédéterminé (37) dans le circuit de charge est un point où la tension varie à mesure que le régime du moteur augmente, que le moyen de détection (20) réagit également à une troisième tension en un point prédéterminé (15) dans le circuit des feux de position, et que le moyen de détection (20) est connecté entre le point prédéterminé (15) dans le circuit des feux de position et le trajet de conduction principal d'un transistor (35), la base du transistor (35) étant connectée au point prédéterminé (37) dans le circuit de charge, la chute de tension dans le moyen de détection (20) étant insuffisante pour faire fonctionner le moyen d'interruption (28) à moins que le régime du moteur ne soit suffisant pour amener la première tension à passer par un niveau présélectionné, que la deuxième tension soit à un niveau correspondant à l'extinction des filaments de feux de route et que la troisième tension soit à un niveau correspondant à l'allumage des feux de position (10).

Fig.1.

Fig.2.

FIG.3

EP 0 112 703 B2